# EUROPEAN PATENT APPLICATION

(11) **EP 4 668 456 A1**
(43) Date of publication of application: **24.12.2025**
(21) Application number: 23932423.9
(22) Date of filing: 12.04.2023
(51) Int. Cl.: H01M 50/449, H01M 50/40

(54) **COATING SLURRY, COATED SEPARATOR, PREPARATION METHOD FOR SEPARATOR, AND BATTERY**

(71) Applicant: Senior (Nantong) New Material Technology Co., Ltd., Nantong, Jiangsu 226010 (CN); Jiangsu Senior New Material Technology Co., Ltd, Changzhou, Jiangsu 213100 (CN)
(72) Inventor: YANG, Dandan, hangzhou, Jiangsu 213100 (CN); LIN, Yulin, hangzhou, Jiangsu 213100 (CN)
(74) Representative: Biallo, Dario
(86) International application number: PCT/CN2023/087800
(87) International publication number: WO 2024/212127

(57) **Abstract**

A coating slurry, a coated separator, a preparation method, and a battery. The main components of the coating slurry comprise a solvent and an adhesive polymer resin, wherein the weight proportion of the adhesive polymer resin in the slurry is 5-20 wt%; and the adhesive polymer resin comprises a combination of a PVDF-based adhesive resin polymer and a polyimide adhesive resin or comprises a combination of at least two polyimide adhesive resins, the mass ratio of the polyimide adhesive resin to the PVDF-based adhesive resin polymer or the mass ratio of the first polyimide adhesive resin to the second polyimide adhesive resin being 50-85:15-50. The separator has good heat resistance, high breakdown resistance and adhesive performance, such that the high safety performance and the cycling stability performance of a subsequently obtained lithium-ion battery are greatly improved.

## Description

### TECHNICAL FIELD

The present application relates to the technical field of battery separators, and specifically a coating slurry used for coating battery separators, a separator coated with the slurry, a preparation method for a separator, and a battery.

### BACKGROUND

The lithium battery separator is one of the four key components in lithium-ion batteries, which play a role in separating the positive and negative electrodes, allowing lithium ions to pass through, and insulating electrons in lithium-ion batteries. The quality of separator performance directly affects the performance of lithium-ion batteries, which is one of the key technologies restricting the development of lithium-ion batteries.

Existing coated separators for lithium-ion batteries, whether the substrate is PP, PE, or PP/PE/PP composite film, and whether coated with ceramic on one side or both sides, exhibit a dielectric breakdown voltage typically in the range of 1.0~2.0 kV. It is difficult to further enhance this dielectric breakdown voltage performance. Consequently, the assembled lithium-ion batteries exhibit poor nail penetration performance and generally struggle to pass nail penetration tests.

Therefore, how to effectively improve the breakdown voltage and nail penetration resistance of separators has become a technical problem that needs to be solved urgently in the art.

### SUMMARY

The present application provides a coating slurry, a coated separator, a preparation method for a separator, and a battery to improve the breakdown voltage and nail penetration performance of battery separators.

According to a first aspect of the present application, a coating slurry is provided. The main component of the coating slurry comprises a solvent and an adhesive polymer resin, and a weight proportion of the adhesive polymer resin in the slurry is 5-20wt%; wherein the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50;
or the adhesive polymer resin comprises a combination of at least two polyimide type adhesive resins; wherein the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50.

In some embodiments, a glass transition temperature of the first polyimide type adhesive resin is greater than 200°C, and a glass transition temperature of the second polyimide type adhesive resin is greater than 140°C.

In some embodiments, the solvent is an organic solvent, the polyimide type adhesive resin is a modified polyimide, and the modified polyimide is soluble in the organic solvent.

In some embodiments, in a case where the adhesive polymer resin comprises a combination of a PVDF-based adhesive resin polymer and a polyimide type adhesive resin, the polyimide type adhesive resin is selected from at least one of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide;
in a case where the adhesive polymer resin comprises a combination of at least two polyimide type adhesive resins, the at least two polyimide type adhesive resins are selected from at least two of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide;

In some embodiments, the coating slurry further comprises a coating pore-expanding agent, and a weight proportion of the coating pore-expanding agent in the slurry is 0.05-5wt%.

In some embodiments, the coating pore-expanding agent is one or a combination of water, ethanol, polyethylene glycol, and methanol.

In some embodiments, the coating slurry further comprises ceramic particles, and a weight proportion of the ceramic particles in the slurry is greater than Owt% and less than or equal to 5wt%.

In some embodiments, the ceramic particles are any one or a combination of alumina, boehmite, silicon oxide, magnesium oxide, titanium oxide, and zirconium oxide.

In some embodiments, a weight proportion of the solvent in the slurry is 70-95wt%.

In some embodiments, the solvent is one or a combination of acetone, N-methylpyrrolidone, and dimethylacetamide (DMAc).

In some embodiments, a substrate is any one of a PP film, a PE film, a PP/PE/PP composite film, a double-sided or single-sided ceramic-coated film, and a double-sided or single-sided nano-fiber-coated film.

According to a second aspect of the present application, a coated separator is provided. The coated separator comprises a substrate and a polymer layer, and the polymer layer is coated on one side or both sides of the substrate; wherein the polymer layer comprises at least two functional groups selected from an imide group, heteroaromatic ring, and aromatic ring, and at least one functional group selected from an ester group, ether bond, thioether bond, a ketone group, an amide group, phenolic hydroxyl ether, a methyl group, a methylene group, a trifluoromethyl group, and C-F bond.

According to a second aspect of the present application, a coated separator is provided. The coated separator comprises a substrate and a polymer layer, and the polymer layer is coated on one side or both sides of the substrate; wherein the polymer layer is formed through coating the coating slurry provided by the first aspect of the present application.

According to a second aspect of the present application, a coated separator is provided. The coated separator comprises a substrate and a polymer layer, and the polymer layer is coated on one side or both sides of the substrate; wherein the coated separator has a dielectric breakdown voltage of 2.1-5.0 kV, and a dielectric strength is greater than 4.5 kV/mil.

In some embodiments, a surface layer of the polymer layer has a porous structure.

In some embodiments, the coated separator further comprises ceramic particles, and the ceramic particles are embedded in the polymer layer, with an island-shaped structure.

In some embodiments, a size of the island-shaped structure is 0.5-2 µm.

In some embodiments, the porous structure is a honeycomb-like and dense porous structure.

According to a third aspect of the present application, a method for preparing a coated separator is provided, which comprises the following steps:
providing a substrate;
preparing a slurry: adding 5-20wt% of an adhesive polymer resin to a solvent and fully dissolving to obtain a coating slurry; wherein, the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50; or the adhesive polymer resin comprises a combination of at least two polyimide type adhesive resins, and the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50; and
coating: coating the above-prepared coating slurry onto at least one surface of the substrate to form a polymer layer on the substrate.

According to a fourth aspect of the present application, a battery is provided. The battery comprises a coated separator, a positive electrode, a negative electrode, and an electrolyte, and the coated separator is the coated separator provided by the second aspect of the present application.

Compared with the prior art, the present application has the following beneficial effects.

In the coating slurry and the coated separator provided in the present application, a weight proportion of the adhesive polymer resin in the slurry is arranged as 5-20wt%; and the adhesive polymer resin is arranged as a combination comprising a PVDF-based adhesive resin polymer and a polyimide type adhesive resin, and a mass ratio of the polyimide type adhesive resin to the PVDF-based adhesive resin polymer is 50-85:15-50; or the adhesive polymer resin comprises a combination of at least two polyimide type adhesive resins, wherein the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50; thereby the obtained separator has excellent heat resistance, high breakdown voltage performance and electrode sheet interface adhesion performance, which greatly improves the safety performance and cycle stability performance of the subsequently obtained lithium-ion batteries.

### BRIEF DESCRIPTION OF DRAWINGS

The present application is further illustrated in conjunction with the drawings and the specific embodiments below.
FIG. 1 shows a comparison of the discharge capacity of the PI-coated separator provided by an embodiment of the present application and the CCS separator at -40 degree;
FIG. 2A-FIG. 2B show SEM morphology images of the surface of the coated separator provided by an embodiment of the present application; and
FIG. 3 shows a flowchart of the preparation method for a coated separator provided by an embodiment of the present application.

### DETAILED DESCRIPTION

The technical solution of the embodiments in the present application will be clearly and completely described below, and it is clear that the embodiments described are only part of the embodiments of the present application, not all embodiments. Based on the embodiments in the present application, all other embodiments obtained by ordinary technicians in the field without creative labor shall fall within the protection scope of the present application.

Prior to filing the present application, the applicant conducted a series of studies and experiments on the existing separators.

Existing coated separators for lithium-ion batteries, whether the substrate is PP, PE, or PP/PE/PP composite film, and whether coated with double-sided or single-sided ceramic coating, or high-heat-resistance nanofiber coating, generally exhibit low dielectric breakdown voltage. It is typically in the range of 1.0~2.0 kV/mm and is difficult to further enhance. And it hinders further improvement in the safety performance of the assembled lithium-ion batteries, which typically fail to pass the nail penetration test.

In view of this, the present application provides a coating slurry, a coated separator, a preparation method for a separator, and a battery, aiming to improve the high breakdown voltage and nail penetration performance of the battery separator.

The technical solution of the present application is described in detail by specific embodiments below. The following specific embodiments can be combined with each other, and the same or similar concepts or processes may not be repeated in some embodiments.

An embodiment of the present application firstly provides a coating slurry. The main component of the coating slurry comprises a solvent and an adhesive polymer resin, and a weight proportion of the adhesive polymer resin in the slurry is 5-20wt%; wherein the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50;
or the adhesive polymer resin comprises a combination of at least two polyimide type adhesive resins; wherein the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50.

Specifically, a weight proportion of the adhesive polymer resin in the slurry may be, for example, 5wt%, 10wt%, 15wt%, or 20wt%. As a further preferred embodiment, the weight proportion of adhesive polymer resin in the slurry is 5-15wt%; if the weight proportion of the adhesive polymer resin in the slurry within this range, the coating is relatively easy to carry out; if the weight proportion exceeds 15%, the viscosity of the slurry is large, and there will be certain requirements for the coating process.

A mass ratio of the polyimide type adhesive resin to the PVDF-based adhesive resin polymer may be, for example, 50:15, 50:20, 50:25, 50:30, 60:15, 60:20, 60:25, 60:30, 60:35, 60:40, 60:45, 60:50, 70:15, 70:20, 70:25, 70:30, 70:35, 70:40, 70:45, 70:50, 80:15, 80:20, 80:25, 80:30, 80:35, 80:40, 80:45, 80:50, 85:15, 85:20, 85:25, 85:30, 85:35, 85:40, 85:45, or 85:50.

A mass ratio of the first polyimide type adhesive resin to the second polyimide type adhesive resin may be, for example, 50:15, 50:20, 50:25, 50:30, 60:15, 60:20, 60:25, 60:30, 60:35, 60:40, 60:45, 60:50, 70:15, 70:20, 70:25, 70:30, 70:35, 70:40, 70:45, 70:50, 80:15, 80:20, 80:25, 80:30, 80:35, 80:40, 80:45, 80:50, 85:15, 85:20, 85:25, 85:30, 85:35, 85:40, 85:45, or 85:50.

Of course, it should be realized that the present application is not limited to the above, the mass ratio of the polyimide type adhesive resin to the PVDF-based adhesive resin polymer and/or the mass ratio of the first polyimide type adhesive resin to the second polyimide type adhesive resin may also be other values, as long as the mass ratio of the polyimide type adhesive resin to the PVDF-based adhesive resin polymer is 50-85:15-50 or the mass ratio of the first polyimide type adhesive resin to the second polyimide type adhesive resin is 50-85:15-50.

A glass transition temperature of the first polyimide type adhesive resin is greater than 200°C, and a glass transition temperature of the second polyimide type adhesive resin is greater than 140°C. The glass transition temperature of the first polyimide type adhesive resin is greater than 200°C, which can endow sufficient heat resistance and safety performance for the coating; the glass transition temperature of the second polyimide type adhesive resin does not need to be too high and is sufficient to be greater than 140°C, which has the advantage of ensuring a certain heat resistance of the separator on the one hand, and providing stronger adhesion performance and adhesion to the substrate on the other hand.

As an example, the solvent is an organic solvent, the polyimide type adhesive resin is a modified polyimide, and the modified polyimide is soluble in the organic solvent. It is understood that the modified polyimide can be prepared by grafting to polyimide by functional groups, and of course, polyimide can also be soluble in organic solvents after modification through other modification methods.

In some embodiments, in a case where the adhesive polymer resin comprises a combination of a PVDF-based adhesive resin polymer and a polyimide type adhesive resin, the polyimide type adhesive resin is selected from at least one of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide;
in a case where the adhesive polymer resin comprises a combination of at least two polyimide type adhesive resins, the at least two polyimide type adhesive resins are selected from at least two of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide. Of course, it should be realized that these polymer resins are only examples, and the present application is not limited to this, and technicians in this field can also choose other polymer resins to achieve the purpose of the present application.

In some embodiments, the coating slurry further comprises a coating pore-expanding agent, and a weight proportion of the coating pore-expanding agent in the slurry is 0.05-5wt%. As an example, the weight proportion of the coating pore-expanding agent in the slurry may be, for example, 0.05wt%, 0.1wt%, 0.2wt%, 0.3wt%, 0.4wt%, 0.5wt%, 0.6wt%, 0.7wt%, 0.8wt%, 0.9wt%, 1wt%, 1.5wt%, 2wt%, 2.5wt%, 3wt%, 3.5wt%, 4wt%, 4.5wt%, 5wt%, or a range value between any two numerical values. Of course, it should be realized that the present application is not limited to this, and the weight proportion of the coating pore-expanding agent in the slurry can also be other values, as long as within 0.05-5wt%.

In some embodiments, the coating pore-expanding agent is one or a combination of water, ethanol, polyethylene glycol, and methanol. Of course, it should be realized that the present application is not limited to this, and the coating pore-expanding agent can be other materials. By adding the coating pore-expanding agent to the slurry, the separator made from the slurry has a honeycomb-like and dense porous structure formed on the surface of the coating, so that the coating can ensure certain air permeability, adsorb enough electrolyte, provide sufficient ion channels, and reduce the interfacial impedance. At the same time, higher electronic insulation is provided, and the breakdown voltage performance is increased.

In some embodiments, the coating slurry further comprises ceramic particles, and a weight proportion of the ceramic particles in the slurry is greater than 0wt% and less than or equal to 5wt%. As an example, the weight proportion of the ceramic particles in the slurry may be, for example, 0.5wt%, 1wt%, 1.5wt%, 2wt%, 2.5wt%, 3wt%, 3.5wt%, 4wt%, 4.5wt%, 5wt%, or a range value between any two numerical values. Of course, it should be realized that the values are only examples, and the present application is not limited to this. The weight proportion of the ceramic particles in the slurry can also be other values, as long as more than 0wt% and less than or equal to 5wt%.

As an example, the ceramic particles are any one or a combination of alumina, boehmite, silicon oxide, magnesium oxide, titanium oxide, and zirconium oxide. Of course, it should be realized that the present application is not limited to this, and the ceramic particles can be other materials. By adding ceramic particles to the slurry, the separator made from the slurry is distributed with granular ceramics on the surface of the coating, and the granular ceramics are embedded in the polymer layer, forming an isolated island-shaped structure with a diameter of 0.5-2 µm. The island-shaped structure is not exactly a regular cone, and the "diameter" here refers to the average of the line from the projection center of the island-shaped structure on the substrate surface to the edge. These isolated island-shaped structures can increase the porosity of the coating, improve air permeability, and simultaneously, increase the electrolyte absorption rate, increase the wettability of the electrolyte, and reduce the internal interface impedance of lithium-ion batteries. Due to the special island-shaped structure, the surface void of the coating interface embedded in the electrode sheet is increased, the adhesion of the interface is improved, and the cycle stability of the battery is enhanced.

In some embodiments, a weight proportion of the solvent in the slurry is 70-95wt%. As an example, the weight proportion of the solvent in the slurry may be, for example, 70wt%, 75wt%, 80wt%, 85wt%, 90wt%, 95wt%, or a range value between any two numerical values. Of course, it should be realized that the values are only examples, and the present application is not limited to this. The weight proportion of the solvent in the slurry can also be other values, as long as within 70-95wt%.

As an example, the solvent is one or a combination of acetone, N-methylpyrrolidone, and DMAc. Of course, it should be realized that the present application is not limited to this, and the solvent can be other materials, as long as the solvent can dissolve the adhesive polymer resin.

In some embodiments, a substrate is any one of a PP film, a PE film, a PP/PE/PP composite film, a double-sided or single-sided ceramic-coated film, and a double-sided or single-sided nano-fiber-coated film. Of course, it should be realized that the present application is not limited to this, and other substrates also fall within the protective scope of the present application.

In addition, an embodiment of the present application further provides a coated separator, which comprises a substrate and a polymer layer, and the polymer layer is coated on one side or both sides of the substrate; wherein the polymer layer comprises at least two functional groups selected from an imide group, heteroaromatic ring, and an aromatic ring, and at least one functional group selected from an ester group, ether bond, thioether bond, a ketone group, an amide group, phenolic hydroxyl ether, a methyl group, a methylene group, a trifluoromethyl group, and C-F bond. Specifically, in a case where the adhesive polymer resin in the coating slurry comprises a combination of at least two polyimide type adhesive resins, the polymer layer comprises at least two functional groups selected from an imide group, heteroaromatic ring, and an aromatic ring, and at least one functional group selected from an ester group, ether bond, thioether bond, a ketone group, an amide group, phenolic hydroxyl ether, a methyl group, a methylene group, a trifluoromethyl group, and C-F bond. In a case where the adhesive polymer resin in the coating slurry comprises a combination of a PVDF-based adhesive resin polymer and a polyimide type adhesive resin, the polymer layer is mainly dominated by polyimide, and the functional groups mainly reflect the functional groups in the polyimide molecule (such as any of an imide group, heteroaromatic ring, and an aromatic ring), and functional groups of trifluoromethyl and C-F bond of PVDF exists simultaneously.

In addition, an embodiment of the present application further provides a coated separator, which comprises a substrate and a polymer layer, and the polymer layer is coated on one side or both sides of the substrate; wherein the polymer layer is formed by coating the coating slurry provided aforementioned in the present application.

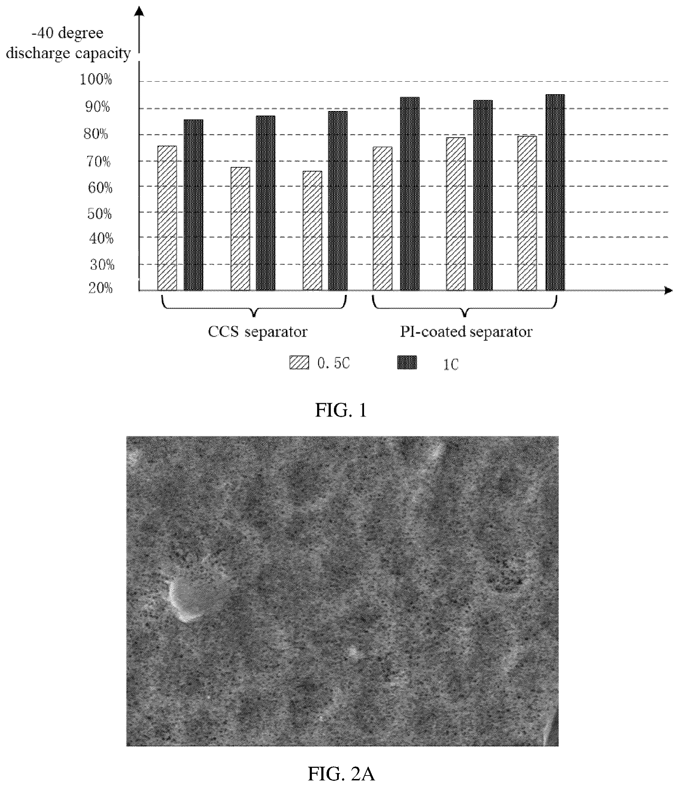

In particular, referring to FIG. 1, the lithium-ion battery, using the lithium-ion battery separator with high breakdown voltage performance and nail penetration performance provided by the present application, has a low-temperature discharge capacity at 1 C of greater than 90%, which is higher than that of the conventional ceramic-coated composite separator. The coating slurry provided by the present application is coated on a separator with a double-sided or single-sided ceramic-coated film, a double-sided or single-sided nanofiber-coated film, a PP or a PE or a PP/PE/PP composite film as the substrate, and the lithium-ion battery separator will be endowed with excellent heat resistance, high breakdown voltage performance, and electrode sheet adhesion performance, which greatly improve the safety performance and cycle stability performance of the lithium-ion battery. In consequence, the lithium-ion battery of the present application is particularly suitable for EV, energy storage and other application fields.

In some embodiments, a surface layer of the polymer layer has a porous structure. As an example, the porous structure is a honeycomb-like and dense porous structure. The term "dense" refers to a dense coating structure with a nanoscale pore size reflected in the SEM image, as shown in FIG. 2A. Because the surface layer of the polymer layer has a pore structure, the coated separator of the present application can ensure a certain degree of air permeability, adsorb sufficient electrolyte, provide sufficient ion channels, and reduce the interface impedance; at the same time, a higher electronic insulation is provided and the breakdown voltage performance is increased.

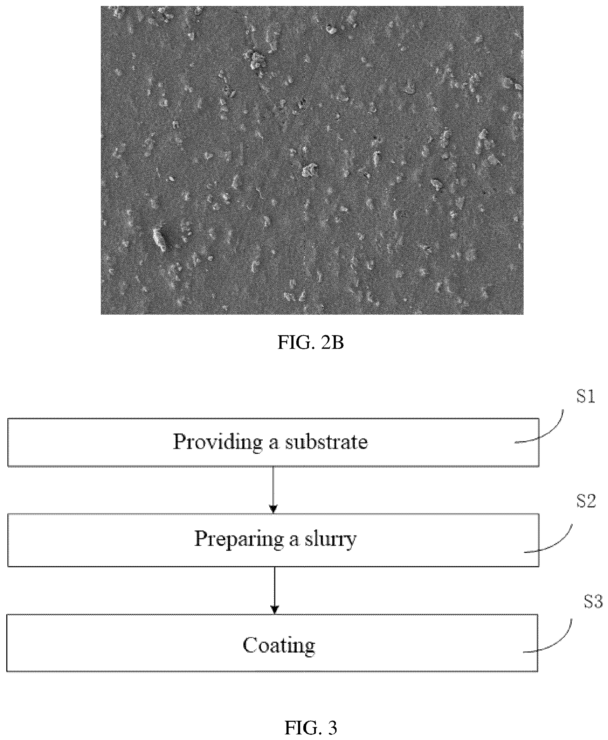

In some embodiments, ceramic particles are further comprised. The ceramic particles are embedded in the polymer layer, forming an island-shaped structure as shown in FIG. 2B. As an example, the island-shaped structure has a size of 0.5-2 µm. These isolated island-shaped structures can increase the porosity of the polymer layer, improve air permeability, and simultaneously, increase the electrolyte absorption rate, increase the wettability of the electrolyte, and reduce the internal interface impedance of lithium-ion batteries. Due to the special island-shaped structure, the surface void of the coating interface embedded in the electrode sheet is increased, the adhesion of the interface is improved, and the cycle stability of the battery is enhanced.

Referring to FIG. 3, an embodiment of the present application also provides a preparation method for a coated separator as shown in FIG. 3, which comprises the following steps:
S1: providing a substrate;
the substrate may be, for example, a PP film, a PE film, a PP/PE/PP composite film, a double-sided or single-sided ceramic-coated film, or a double-sided or single-sided nano-fiber-coated film;
S2: preparing a slurry: adding 5-20wt% of an adhesive polymer resin to a solvent and fully dissolving to obtain a coating slurry; wherein, the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50; or the adhesive polymer resin comprises a combination of at least two polyimide type adhesive resins, and the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50; and
S3: coating: coating the above-prepared coating slurry onto at least one surface of the substrate to form a polymer layer on the substrate.

The slurry can be coated on one side or both sides of the substrate. The coating process can be specifically the NIPS process. For example, the immersion-precipitation-phase inversion method can be used, where an organic solvent such as NMP or acetone or DMAc is used as the solvent, a polymer is used as the solute, and performing simultaneous micro-gravure coating on both sides, and using phase-inversion pore formation accompanied by water washing and drying process to prepare a porous gel-ceramic hybrid coating.

Due to the adhesive polymer resin-containing polymer layer, the separator prepared by this method has the characteristics of high breakdown voltage, insulation, flame retardancy, and adhesion, endowing excellent dielectric breakdown voltage performance of the separator for lithium-ion batteries, which has a dielectric breakdown voltage ranges of 2.1-5.0 kV and a breakdown strength of greater than 4.5 kV/mil; at the same time, the separator has excellent interface adhesion performance with the electrode sheet; lithium-ion batteries assembled with such separators have excellent nail penetration resistance and high dielectric breakdown voltage performance.

In addition, an embodiment of the present application further provides a battery, which comprises a coated separator, a positive electrode, a negative electrode, and an electrolyte, and the coated separator is the coated separator provided in the embodiments of the present application listed above.

The performance of the products from some embodiments of the present application is analyzed below through experiments.

### Example 1

S1: a substrate was provided, the substrate coated on both sides with a ceramic layer; for convenience, this substrate was abbreviated as a ceramic film;
S2: a slurry was prepared: 9wt% of an adhesive polymer resin, 2.5wt% of a coating pore-expanding agent, and 2wt% of ceramic particles were added into a solvent for fully dissolution to obtain a coating slurry; wherein the adhesive polymer resin comprised a first polymer resin and a second polymer resin; specifically, the first polymer resin was polyetherimide, the second polymer resin was polyamide-imide, and a ratio of the first polymer resin to the second polymer resin was 60:40; the solvent was acetone; the coating pore-expanding agent was water; and the ceramic particles were alumina;
S3: coating: the above-prepared coating slurry was coated on the ceramic film by a double-sides simultaneous micro-gravure plate, a porous gel-ceramic hybrid coating was prepared utilizing solidification-induced gelation and phase separation pore formation, combined with water washing and drying process; and a corresponding coated separator was obtained.

On the basis of Example 1, Examples 2-17 and Comparative Examples 1-3 were formed respectively by changing the first polymer resin and the second polymer resin, the ratio of the first polymer resin to the second polymer resin, the ratio of polymer in the slurry, the substrate, the thickness of the coating and the thickness of the separator, and the proportion of ceramic particles in the slurry; and the differences in each example and comparative example are detailed in Table 1. The coating thickness in Table 1 refers to the coating thickness on both sides, that is, the thickness of the coating on both sides obtained by coating the coating slurry on the ceramic film by double-sides simultaneous or step-by-step micro-gravure plate.

Referring to Table 1, Table 1 shows the properties of the corresponding separators obtained from the above Examples 1-17 and Comparative Examples 1-3.

Test method of adhesion: a to-be-test coated film sample was made into a standard sample strip (coated film (25 mm × 180 mm), electrode sheet (20 mm × 150 mm)), a coated surface of the separator was bond to the electrode sheet by using a hot press shaping machine under a certain pressure at a temperature of 60°C, and then the other end of the electrode sheet and the sample were clamped by a clamp, and pulling force was applied until the stroke of the tension machine ended. Tension machine parameter settings: positioning shift: 150 mm, test speed: 300 mm/min.

Test method of thermal shrinkage rate at 130°C for 60 min: first, a separator was cut into 50 mm × 50 mm test sample strips along the transverse and machine directions of the separator; second, the cut sample was sandwiched between A4 papers, 5 sheets on top and 5 sheets on the bottom; next, the oven temperature was set to 130°C, and the oven was allowed to heat up to the set temperature and was fully preheated to ensure the internal temperature stabilized at the set point; then, the prepared samples sandwiched between A4 papers, together with the papers, were placed quickly into the oven, and the sample was placed in the exact center position of the upper layer of the oven, and the lower layer was not used, and the oven door was closed immediately; after closing the oven door, the test was forest to 60 min according to the test requirements, once the time elapsed, the sample separator were removed from the oven; after cooling to room temperature, the separator was gently flattened; the distance between the transverse or machine edges of the separator was measured, the data was recorded and the thermal shrinkage rate was calculated. The formula for calculating the thermal shrinkage rate: thermal shrinkage rate % = { (initial length between marks - length between marks after heating) / initial length between marks } × 100%.

The film meltdown temperature was obtained by TMA test. TMA test for film meltdown temperature means applying a certain force to tension the separator (simulating its state inside a battery) and then gradually increasing the temperature until rupture occurs.

### Dielectric breakdown voltage test:

Equipment used: withstanding voltage tester, consisting of a high-voltage boost loop (capable of adjusting to output the required test voltage), a leakage current detection loop (capable of setting an alarm current), and an indicating instrument (directly reading the output voltage and leakage current value <or breakdown alarm current value>).

Working principle: during the test, when the device under test reaches the specified time under the specified test voltage, the instrument automatically cuts off the output voltage; once the breakdown occurs, that is, the leakage current exceeds the set alarm current, the instrument will emit an alarm sound, and the alarm value is the breakdown value.

Test method: a to-be-test film sample with a size of A4 was taken, laid flat on a clean and flat tin foil or aluminum foil surface; the instrument was set with the upper limit output voltage of 6 kV, an output current of 1 mA, and a rise time of 30 s; a copper conductor column was gently placed on the film sample, the START button of the instrument was clicked, and the instrument started testing; during the rising process of current and voltage, once breakdown occurred, that is, the leakage current exceeded the set alarm current, the instrument emitted an alarm sound, and the alarm value was the breakdown value; 10 different points on the sample surface of the film was taken for repeated testing for 10 times, and the average value was the dielectric breakdown voltage value in the present application.

Dielectric breakdown strength = (dielectric breakdown voltage value * 25.4 )/ thickness of the film sample; expressed as the withstand voltage performance per unit thickness.

The air permeability increment was: the difference between the air permeability of the separator after coating minus the air permeability of the substrate, which represented the added value of air permeability brought by the coating to the film. Air permeability testing can be performed by referring to GB/T 36363-2018 "Polyolefin separator for lithium-ion battery".

**Table 1**

| Item | First poly mer resin | Second polyme r resin | Fir st po ly me r res in: se co nd po ly me r res in | Pro por tion of pol ym er | Pro por tion of cer ami c | Prop ortio n of pore-expa nding agent | Sub strat e | Coat ing thic knes s /µm | Sep arat or thic knes s /µm | Adhe sion gf/25 mm | | Heat shrin kable (130° C*60 min) | | Film ruptur e temper ature (°C) | | Dielec tric breakd own voltag e kV | Die lect ric bre akd ow n stre ngt h kV /mi 1 | Air per mea bilit y incr eme nt s/10 0 mL |
|---|---|---|---|---|---|---|---|---|---|---|---|---|---|---|---|---|---|---|
| | | | | | | | | | | A s i d e | B s i d e | M D | T D | M D | T D | | | |
| Exa mpl e 1 | Polye theri mide | Polyam ide-imi de | 60 :4 0 | 9% | 1% | 2% | Cera mic-coat ed film | 2.0 | 16.0 | 7 2 0 | 6 5 0 | 2 5 | 1 0 | 1 5 5. 3 | 1 5 3. 5 | 2.9 | 4.6 | 30 |
| Co mpa rativ e Exa mpl e 1 | PVD F-HF P co-po lymer | PVDF-CTEF co-poly mer | 60 :4 0 | 9% | 1% | 2% | Cera mic-coat ed film | 2.0 | 16.0 | 7 7 0 | 6 9 0 | 2 5 | 1 1 | 1 5 0. 0 | 1 4 9. 5 | 1.8 | 2.9 | 40 |
| Exa mpl e 2 | Polye theri mide | Polyam ide-imi de | 70 :3 0 | 9% | 1% | 2% | Cera mic-coat ed film | 2.0 | 16.0 | 6 0 0 | 5 5 0 | 2 1 | 0 5 | 1 5 4. 3 | 1 5 4. 2 | 3.8 | 6.0 | 33 |
| Exa **mpl** e 3 | Polye theri mide | Polyam ide-imi de | 80 :2 0 | 9% | 1% | 2% | Cera mic-coat ed film | 2.0 | 16.0 | 5 9 0 | 5 5 0 | 2 3 | 0 5 | 1 5 6. 3 | 1 5 3. 9 | 4.6 | 7.3 | 32 |
| Exa mpl e 4 | Polyi mide | Polyest erimide | 80 :2 0 | 9% | 1% | 2% | Cera mic-coat ed film | 2.0 | 16.0 | 4 9 0 | 4 3 0 | 3 | 1 5 | 1 5 6. 0 | 1 5 4. 0 | 3.6 | 5.7 | 33 |
| Exa mpl e 5 | Polyi mide | Polyam ide-imi de | 80 :2 0 | 9% | 1% | 2% | Cera mic-coat ed film | 2.0 | 16.0 | 4 8 0 | 4 5 0 | 2 5 | 0 | 1 5 5. 0 | 1 5 3. 0 | 3.4 | 5.4 | 29 |
| Exa mpl e 6 | Bism aleimi de | Polyeth erimide | 80 :2 0 | 9% | 1% | 2% | Cera mic-coated film | 2.0 | 16.0 | 5 3 0 | 4 0 0 | 2 5 | 1 5 | 1 5 7. 0 | 1 5 6. 0 | 3.5 | 5.6 | 25 |
| Exa mpl e 7 | Polyi mide | PVDF-HFP co-poly mer | 80 :2 0 | 9% | 1% | 2% | Cera mic-coat ed film | 2.0 | 16.0 | 2 0 0 | 1 5 0 | 2 | 1 5 | 1 4 9. 8 | 1 4 8. 0 | 1.9 | 3.0 | 41 |
| Exa mpl e 8 | Polye theri mide | Polyam ide-imi de | 80 :2 0 | 9% | 1% | 2% | UV-cros slin ked coat ed film | 1.5 | 16.0 | 5 8 0 | 5 5 0 | 1 8 | 0 | 2 3 2. 0 | 2 1 9. 0 | 4.5 | 7.1 | 36 |
| Exa mpl e 9 | Polye theri mide | Polyam ide-imi de | 80 :2 0 | 9% | 1% | 2% | Nan o fiber -coa ted film | 2.0 | 16.0 | 4 8 0 | 4 4 0 | 1 | 0 | 1 8 9. 0 | 1 6 5. 0 | 3.8 | 6.0 | 38 |
| Exa mpl e 10 | Polye theri mide | Polyam ide-imi de | 80 :2 0 | 9% | 1% | 2% | PE film | 3.0 | 12.0 | 3 8 0 | 3 3 0 | 9 | 7 | 1 6 5. 3 | 1 5 6. 9 | 3.8 | 8.0 | 35 |
| Exa mpl e 11 | Polye theri mide | PVDF-HFP co-poly mer | 80 :2 0 | 9% | 1% | 2% | PE film | 3.0 | 12.0 | 4 9 0 | 4 3 0 | 9 0 | 6 5 | 1 4 9. 7 | 1 4 9. 0 | 2.6 | 5.5 | 45 |
| Exa mpl e 12 | Polye theri mide + polya mide-imide | PVDF-HFP co-poly mer | 80 :2 0 | 9% | 1% | 2% | PE film | 3.0 | 12.0 | 5 7 0 | 4 5 0 | 8 5 | 7 0 | 1 4 9. 7 | 1 4 8. 0 | 2.5 | 5.3 | 50 |
| Exa mpl e 13 | Polye theri mide | Polyam ide-imi de | 80 :2 0 | 9% | 1% | 2% | PP film | 3.0 | 12.0 | 3 6 2 | 3 3 0 | 1 | 0 | 1 6 7. 3 | 1 6 6. 9 | 3.6 | 7.6 | 30 |
| Exa mpl e 14 | Polye theri mide | Polyam ide-imi de | 80 :2 0 | 7% | 3% | 2% | PP film | 3.0 | 12.0 | 3 3 2 | 3 0 0 | 1 | 0 | 1 6 8. 3 | 1 6 5. 4 | 3.1 | 6.6 | 20 |
| Exa mpl e 15 | Polye theri mide | Polyam ide-imi de | 80 :2 0 | 7% | 3% | 0% | PP film | 3.0 | 12.0 | 3 0 0 | 2 9 0 | 1 | 0 | 1 6 7. 3 | 1 6 4. 4 | 3.2 | 6.8 | 75 |
| Co mpa rativ e Exa mpl e 2 | Polye theri mide | Polyam ide-imi de | 80 :2 0 | 4% | 1% | 2% | PP film | 2.0 | 11.0 | 5 0 | 8 0 | 1 1 | 0 | 1 6 2. 0 | 1 6 0. 0 | 1.5 | 3.5 | 10 |
| Co mparativ e Exa mpl e 3 | Polye therimide | Polyam ide-imide | 80 :20 | 21 % | 1% | 2% | PP film | 5.0 | 14.0 | 7 6 0 | 6 5 0 | 1 . 1 | 0 | 1 6 3. 0 | 1 6 2. 0 | 3.5 | 6.4 | 120 |
| Exa mpl e 16 | Polye theri mide | Polyam ide-imi de | 80 :2 0 | 7% | 6% | 2% | PP film | 5.0 | 14.0 | 1 5 2 | 1 0 0 | 1 | 0 | 1 6 6. 3 | 1 6 3. 4 | 2.9 | 5.3 | 20 |
| Exa mpl e 17 | Polye theri mide | Polyam ide-imi de | 80 :2 0 | 9% | 0% | 2% | PP film | 2.0 | 11.0 | 5 2 0 | 4 9 0 | 1 2 | 0 | 1 6 6. 3 | 1 6 3. 4 | 3.7 | 7.9 | 100 |

As can be seen from Table 1, the present application significantly enhanced the overall dielectric breakdown voltage performance and adhesion of the separator. Examples 1-7, Example 8, Example 9, Examples 10-12, and Examples 13-15 involved applying the slurry to different substrates of ceramic-coated film, UV-crosslinked coated film, nanofiber-coated film, PE-based film, and PP-based film, respectively, as different substrates. It can be seen that no matter what substrate is used, the coated separator of the present application has high adhesion and low air permeability increment, and the withstand voltage performance has been greatly improved compared with the separators in Comparative Examples. In Examples 1-7, the surface of the ceramic-coated separator substrate is coated with polymers mixed in different ratios. It can be seen that in a case where the first polymer resin is selected from polyetherimide, and the ratio of the first polymer resin to the second polymer resin is 80:20 (Example 3), the coated separator has better comprehensive performance with excellent withstand voltage performance, dielectric strength and adhesion, and low air permeability increment, which is because the first polymer polyetherimide possesses good dielectric strength and withstand voltage performance, and when the proportion of polyetherimide is high, polyetherimide can endow the separator better insulation and dielectric breakdown voltage performance. The coordination of the regulation on the ratio of the first polymer to the second polymer and the proportion of the polymer in the slurry provides a good macroporous structure of the coating, which increases the air permeability.

In Example 8, a UV-crosslinked coated separator was used as the substrate for coating. Compared with Example 3, Example 8 has a thinner coating thickness, but the dielectric strength and dielectric breakdown voltage are equivalent to that of Example 3, and Example 8 also has better adhesion characteristics and high-temperature resistance, which is due to the cross-linked network structure formed by the UV-coated separator substrate coating adhesive, the polyimide coating is not easy to penetrate into the bottom layer, but forms a chemical bond at the interface between the UV-coated separator substrate and the polyimide coating, and a relatively dense coating structure is formed, increasing the coating adhesion effect and endowing better voltage resistance.

In Example 9, a nanofiber-coated separator was used as substrate for coating. Compared with Example 3, Example 9 has equivalent dielectric strength and dielectric breakdown voltage to that of Example 3, and Example 9 also has better adhesion characteristics and high-temperature resistance, which is due to the stacking of the superior heat resistance of the nanofiber-coated separator and the excellent voltage resistance of the polyimide coating. Example 10 is an example using PE-based film as the substrate for coating. Compared with the conventional PE-based film, the film rupture temperature and withstand voltage performance are greatly improved (the film rupture temperature of the conventional PE-based film is generally 145°C, and the dielectric breakdown voltage is 1.4 kV). Compared with Example 11 of using PVDF-HFP co-polymer as the second polymer resin, Example 10 has a higher film rupture temperature and withstand voltage performance, which is due to the high heat resistance and insulation properties of the polyimide resin itself.

Example 13 is an example using PP-based film as the substrate for coating. Compared with Example 10 using PE-based film for coating, the heat resistance properties of Example 13 has significantly improved. From the comparison of Example 13 and Comparative Examples 2 and 3, it can be seen that the proportion of the first polymer resin and the second polymer resin in the slurry is very critical. If the proportion is below 5%, the coating thickness is difficult to control, and the interface adhesion of the separator to the electrode sheet and the adhesion to the substrate cannot be ensured, and a risk of coating peeling is existed. If the proportion is overly high, for example, in a case where the proportion is more than 20%, the coating thickness of the coating is difficult to control, and the coating process cannot be smoothly realized, and the porosity of the coating is very low, resulting in excessive air permeability incremental value. It can be understood that the "coating thickness is difficult to control" refers to the thickness uniformity of the overall coating is poor during the coating process, for example, the coating thickness of some areas may be less than 3 µm and some areas may be higher than 5 µm in Comparative Example 3. From the comparison of Example 13 and Examples 16 and 17, it can be seen that although the separator coated without ceramic particles in the polymer slurry has improved the breakdown performance, heat resistance and adhesion compared with the conventional separator, its air permeability increment is large, which may affect the ion permeability of the separator; in a case where the proportion of ceramic particles exceeds 5%, the coating thickness is difficult to control and the air permeability increment is difficult to control, which will greatly reduce the adhesive performance of the separator.

Example 15 is an embodiment with an additive amount of the pore-expanding agent of 0%. Compared with other examples and comparative examples, it can be seen that the addition of the pore-expanding agent can increase the porosity of the coating, provide sufficient ion channels, and reduce the overall impedance of the lithium-ion battery. Without the adding of the pore-expanding agent, the impedance will increase, and although the breakdown voltage will increase, due to the denser pores, the air permeability increment will become larger, the cycling lifetime of the battery cell will be reduced, the ionic conductivity will decrease, and the energy density will decrease, which will not meet the needs of the product.

In the present application, the main material of the first polymer resin is selected from polyimide resin with excellent dielectric and insulating properties. The material possesses good dielectric properties, insulation, heat resistance, and can endow the separator with high-voltage electrical breakdown performance. Under the premise of ensuring a certain degree of heat resistance, the second polymer resin material can provide the separator with high adhesion performance and good adhesion performance to the substrate, as well as excellent film-forming performance to ensure the possibility of the process. The flexible selection of substrates with different characteristics can meet the different needs of customers for heat resistance, film meltdown temperature, and breakdown voltage, and finally realize differentiated product design and further improve the overall safety performance of the separator.

In addition, an embodiment of the present application further provides a coated separator, which comprises a substrate and a polymer layer, and the polymer layer is coated on one side or both sides of the substrate; the dielectric breakdown voltage of the coated separator is 2.1-5.0 kV, and the breakdown strength is greater than 4.5 kV/mil.

The PI-coated separator of Example 2 in the present application and a CCS-coated separator with the same substrate as Example 2 were assembled into the lithium cobalt oxide positive electrode cylindrical battery, and the cylindrical battery was subjected to nail penetration test. The test results are shown in Table 2 below.

**Table 2**

| Scheme | Voltage V | Temperature °C | Resistance mQ | Judgment |
|---|---|---|---|---|
| CCS-coated separator | 4.046 | 26.7 | 627.1 | Failed |
| PI-coated separator | 4.100 | 26.5 | 109.3 | Passed |

It should be noted that the "voltage" in the above table refers to the voltage applied by the test nail penetration, the "temperature" refers to the battery cell temperature, and "resistance" refers to the internal resistance of the battery cell after assembly. After testing, it can be seen that the CCS-coated separator burns strongly in the nail penetration on battery cell test under a certain voltage, which is judged to be "Failed". The PI-coated separator of Example 2 has no obvious fire or combustion phenomena in the nail penetration on battery cell test under a certain voltage, and the judgment result is "Passed".

In the description of the present specification, the description of the terms "an embodiment", "an example ", "specific embodiment process", "one example", etc. means that the specific features, structure, materials, or characteristics described in combination with the embodiment or example are comprised in at least one embodiment or example of the present application. In this specification, the schematic formulation of the above terms does not necessarily refer to the same embodiment or example. Moreover, the specific features, structures, materials, or characteristics described may be combined in an appropriate manner in any one or more embodiments or examples.

Finally, it should be noted that: the above embodiments are merely used to illustrate the technical solution of the present application and should not be regarded as a specific limitation to the present application; although the present application is described in detail with reference to the aforementioned embodiments, ordinary technicians in this field should understand that it may still modify the technical solutions recorded in the aforementioned embodiments, or replace some or all of the technical features thereof; these modifications or substitutions do not make the essence of the corresponding technical solution out of the scope of the technical solutions of each embodiment of the present application.

## Claims

1. A coating slurry, which has a main component comprising a solvent and an adhesive polymer resin, and a weight proportion of the adhesive polymer resin in the slurry is 5-20wt%; wherein the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50;
or the adhesive polymer resin comprises a combination of at least two polyimide type adhesive resins; wherein the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50.

2. The coating slurry according to claim 1, wherein a glass transition temperature of the first polyimide type adhesive resin is greater than 200°C, and a glass transition temperature of the second polyimide type adhesive resin is greater than 140°C.

3. The coating slurry according to claim 1, wherein the solvent is an organic solvent, the polyimide type adhesive resin is a modified polyimide, and the modified polyimide is soluble in the organic solvent.

4. The coating slurry according to claim 3, wherein in a case where the adhesive polymer resin comprises a combination of a PVDF-based adhesive resin polymer and a polyimide type adhesive resin, the polyimide type adhesive resin is selected from at least one of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide;
in a case where the adhesive polymer resin comprises a combination of at least two polyimide type adhesive resins, the at least two polyimide type adhesive resins are selected from at least two of the following polymer resins: ether-anhydride-type polyimide, fluorinated-anhydride-type polyimide, ketone-anhydride-type polyimide, bismaleimide, olefin-terminated polyimide, polyesterimide, polyamide-imide, and polyetherimide.

5. The coating slurry according to any one of claims 1-4, wherein the coating slurry further comprises a coating pore-expanding agent, and a weight proportion of the coating pore-expanding agent in the slurry is 0.05-5wt%.

6. The coating slurry according to claim 5, wherein the coating pore-expanding agent is one or a combination of water, ethanol, polyethylene glycol, and methanol.

7. The coating slurry according to claim 6, wherein the coating slurry further comprises ceramic particles, and a weight proportion of the ceramic particles in the slurry is greater than Owt% and less than or equal to 5wt%; preferably, the ceramic particles are any one or a combination of alumina, boehmite, silicon oxide, magnesium oxide, titanium oxide, and zirconium oxide.

8. The coating slurry according to claim 7, wherein a weight proportion of the solvent in the slurry is 70-95wt%; preferably, the solvent is one or a combination of acetone, N-methylpyrrolidone, and DMAc.

9. A coated separator, comprising a substrate and a polymer layer, and the polymer layer is coated on one side or both sides of the substrate; wherein the polymer layer comprises at least two functional groups selected from an imide group, heteroaromatic ring, and aromatic ring, and at least one functional group selected from an ester group, ether bond, thioether bond, a ketone group, an amide group, phenolic hydroxyl ether, a methyl group, a methylene group, a trifluoromethyl group, and C-F bond.

10. A coated separator, comprising a substrate and a polymer layer, and the polymer layer is coated on one side or both sides of the substrate; wherein the polymer layer is formed by coating the coating slurry according to any one of claims 1-8.

11. A coated separator, comprising a substrate and a polymer layer, and the polymer layer is coated on one side or both sides of the substrate; wherein the coated separator has a dielectric breakdown voltage of 2.1-5.0 kV, and a dielectric strength is greater than 4.5 kV/mil.

12. The coated separator according to any one of claims 9-11, wherein a surface layer of the polymer layer has a porous structure; preferably, the porous structure is a honeycomb-like and dense porous structure.

13. The coated separator according to claim 12, wherein the coated separator further comprises ceramic particles, and the ceramic particles are embedded in the polymer layer, with an island-shaped structure; preferably, a diameter of the island-shaped structure is 0.5-2 µm.

14. A method for preparing the coated separator according to any one of claims 11-13, comprising the following steps:
providing a substrate;
preparing a slurry: adding 5-20wt% of an adhesive polymer resin to a solvent, and fully dissolving to obtain a coating slurry; wherein, the adhesive polymer resin comprises a combination of a PVDF-based adhesive resin polymer and a polyimide type adhesive resin, and a mass ratio of the polyimide type adhesive resin to the PVDF-based adhesive resin polymer is 50-85:15-50; or the adhesive polymer resin comprises a combination of at least two polyimide type adhesive resins, and the at least two polyimide type adhesive resins comprise a first polyimide type adhesive resin and a second polyimide type adhesive resin, and a mass ratio of the first polyimide type adhesive resin to the second polyimide type adhesive resin is 50-85:15-50; and
coating: coating the prepared coating slurry onto at least one surface of the substrate to form a polymer layer on the substrate.

15. A battery, comprising a coated separator, a positive electrode, a negative electrode, and an electrolyte, and the coated separator is the coated separator according to any one of claims 9-14.
